# EUROPEAN PATENT APPLICATION

(11) **EP 1 361 149 A1**
(43) Date of publication of application: **12.11.2003**
(21) Application number: 02023456.3
(22) Date of filing: 21.10.2002
(51) Int. Cl.: B62M 17/00, B62K 25/28

(54) **Rear suspension for motorcycles with longitudinal shaft transmission**

(30) Priority: 19.10.2001 IT PI20010069
(71) Applicant: Doveri, Marco, I-56025 Pontedera (Pisa) (IT)
(72) Inventor: Doveri, Marco, I-56025 Pontedera (Pisa) (IT)
(74) Representative: Celestino, Marco

(57) **Abstract**

A rear suspension for a motorcycle with cardan shaft transmission (34), of the type having a suspension arm (33) articulated between the frame (32) of the motorcycle and the hub (31) of the rear wheel (30). Cardan shaft transmission (34) has cardan joint ends (34a,34b) that transmit the torque to the wheel (30) and form an articulated quadrilateral mechanism with the suspension arm (33). The other two sides of the quadrilateral are located on the frame (32) and on the hub (31). This way the transmission shaft (34) bears, in addition to the torque, also the axial loads for equilibrium of the hub. The distance between the cardan joint ends (34a,34b) can be equal to the length of the suspension arm (33) and the distance between the articulated ends of the suspension arm (33) and the two cardan joint ends (34a,34b) are equal so that the quadrilateral is a four-bar linkage. The suspension according to the present invention is remarkably simplified with respect to similar prior art solutions, even if it obtains the same advantages of gentle behaviour when braking and accelerating with respect to motorcycles with rear fork and hub integral to the rear fork.

## Description

### Field of the invention

The present invention relates to the field of motorcycles and more precisely it relates to a structure of motorcycle.

In particular, the invention relates to motorcycles whose end transmission is of the type with longitudinal shaft transmission and bevel gear pair at the wheel hub.

### Background of the invention

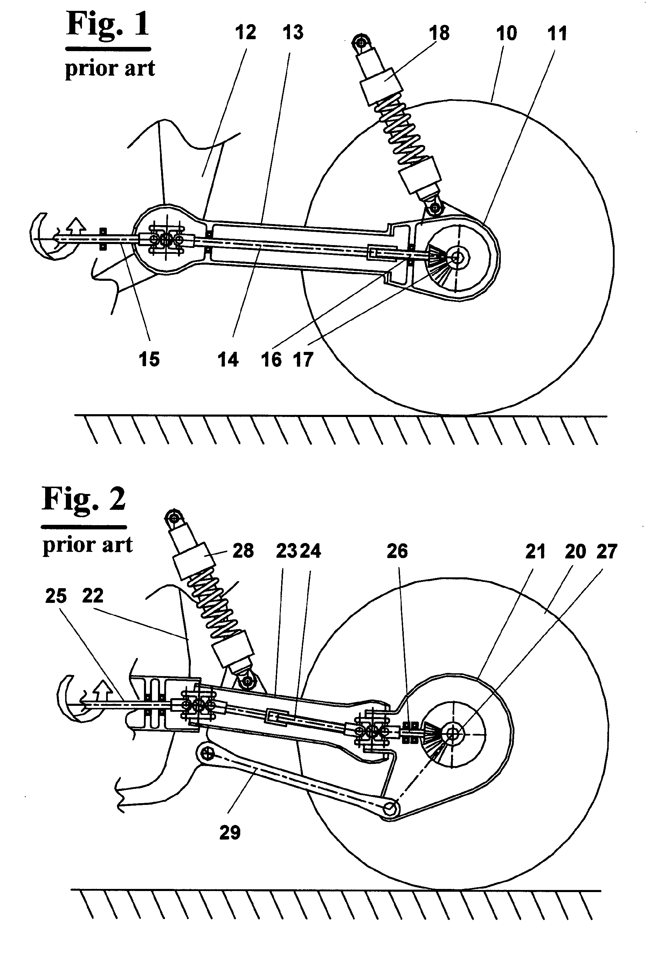

In motorcycles with a longitudinal shaft transmission, usually called "cardan shaft transmission", presently on the market, substantially two types of solutions are used.
a) A first known solution is shown diagrammatically in figure 1. A hub 11 of rear wheel 10 is integral to a frame 12 by means of a structural element 13, called rear fork, having longitudinal connecting arms that provide the required strength and stiffness. A cardan shaft transmission 14 is located in one of the two arms of the rear fork 13 and connects a shaft 15, coming from the gearbox, to an axis 16 of a bevel gear pair, which transmits the movement to axis 17 of wheel 10. Rear fork 13 supports structural loads, whereas cardan shaft 14 transmits the torque. The shocks that are orthogonal to the ground are absorbed by a shock absorber 18 of the motorcycle, hinged to hub 11.
b) A second known solution is shown diagrammatically in figure 2. In a hub 21 of rear wheel 20 a bevel gear pair 26 is housed. A longitudinal connecting element, for such types of suspension, consisting of a single longitudinal side arm 23, is articulated to a frame 22 and to hub 21 with a rotatable coupling. Hub 21 of wheel 20 is connected to frame 22 also by means of a connecting rod 29 articulated to the hub of wheel 20. In a way similar to the previous case, the cardan shaft transmission 24 is located in arm 23 and connects a shaft 25 coming from the gearbox to an axis 26 of a bevel gear pair that transmits the movement to axis 27 of wheel 20. Arm 23 supports the structural loads, and connecting rod 29 supports the axial loads for equilibrium of hub 21, which is mounted in a floating way. The cardan shaft transmission 24 transmits the torque.

The suspension of figure 2 has an arm-transmission arrangement more complex than that of figure 1, even if when braking and accelerating it has a gentler behaviour. In fact, at the equilibrium of the rotation about arm 23 axis, the moment of the forces of contact of rear wheel 20 with the ground is partially biased by the moment of connecting rod 29 hinge on the frame. Then, when braking and accelerating the suspension is respectively extended and compressed less than the solution of figure 1.

### Summary of the invention

It is an object of the present invention to provide a rear suspension for a motorcycle with a much simpler structure than those above described and, then, lighter and cheaper.

According to the invention, a rear suspension for motorcycles with cardan shaft transmission provides an articulated quadrilateral mechanism, wherein the cardan shaft transmission is an edge of the quadrilateral and the suspension arm is the opposite edge of the quadrilateral, whereby the cardan shaft transmission is subject both to torque loads and to axial loads for the hub's equilibrium.

Advantageously, the cardan shaft transmission has a distance between its cardan joint ends equal to the length of the suspension arm, whereas the respective distances between the articulated ends of the suspension arm and the two cardan joint ends are equal, so that the articulated quadrilateral becomes a four-bar linkage. The two shafts respectively of the gearbox and of the bevel gear pair can be parallel to each other during the movement of the suspension.

Therefore, the two shafts at the respective exits of the gearbox and of the pinion gear of the bevel gear pair are preferably parallel to each other. Furthermore, the cardan joint ends provided at the end of the transmission shaft can be oriented so that the cardan shaft transmission is homo-kinetic.

The shaft of the pinion gear of the bevel gear pair can also be not incident with the axis of the wheel, whereby the distance between the transmission shaft and the suspension arm is higher.

Finally, the transmission shaft can be located both above and below with respect to the to suspension arm.

### Brief description of the drawings

Further characteristics and the advantages of the rear suspension for motorcycles according to the invention will be made clearer with the following description of an embodiment thereof, exemplifying but not limitative, with reference to the attached drawings, wherein:
- figure 3 shows the rear suspension for motorcycles according to the invention in a view similar to figures 1 and 2 of the suspensions of prior art;
- figure 4 is a top plan view of the rear suspension of figure 3;
- figure 5 is a different embodiment of the suspension of figure 3, with the shaft of the bevel gear pair not incident with the axis of the hub;
- figure 6 is a different embodiment of the suspension of figure 5, with inversion between suspension arm and cardan shaft transmission.

### Description of the preferred embodiment

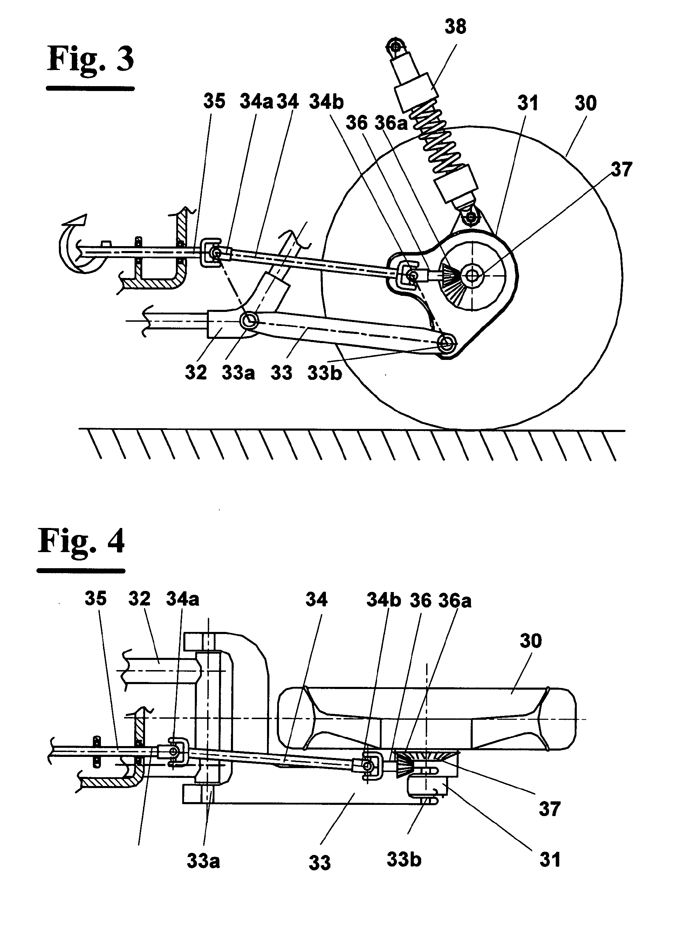

A rear suspension for motorcycles, shown in figure 3 in a way similar to the suspension of figures 1 and 2 of prior art, has a rear wheel 30 mounted on a floating hub 31, in which a bevel gear pair 36a is housed that transmits the movement to axis 37 of wheel 30. A cardan shaft transmission 34 connects a shaft 35 coming from motorcycle's gearbox to axis 36 of bevel gear pair 36a.

According to the invention, a suspension arm 33 is provided articulated to motorcycle's frame 32 by means of a hinge 33a and to floating hub 31 by means of a hinge 33b, as shown also in figure 4. Always as shown in figure 4, and as also described hereinafter, the shafts 34, 35 and 36 are not necessarily coplanar.

The cardan shaft transmission 34 thus forms, along with suspension arm 33, an articulated quadrilateral, indicated with dotted line. In particular, an edge of the quadrilateral is shaft 34 of the cardan shaft transmission, that is arranged between cardan joint ends 34a and 34b, whereas the opposite edge of the quadrilateral is suspension arm 33, between its joint ends 33a and 33b. The other two opposite sides of the articulated quadrilateral belong respectively to frame 32, between the cardan joint end 34a and the axis of hinge 33a, and to floating hub 31, between cardan joint end 34b and the axis of hinge 33b.

The axle 36 of pinion gear 36a of the bevel gear group in hub 31 and the shaft 35 at the exit of the motorcycle's gearbox are preferably parallel to each other, so that, by orienting suitably cardan joint ends 34a and 34b of transmission 34, the latter is homo-kinetic.

As shown in figure 3, moreover, a shock absorber 38 is fixed to hub 31, and can comprise a system of progressive suspension. Alternatively, in an equivalent way, the suspension 38 can be fixed to arm 33, in a way similar to figure 2.

Advantageously, cardan shaft 34 has a distance between the cardan joint ends 34a and 34b equal to the length of arm 33, and the respective distances between the articulated ends 33a and 33b of arm 33 and the two cardan joint ends 34a and 34b are equal, so that the quadrilateral becomes a four-bar linkage.

The suspension according to the present invention is remarkably simplified with respect to that of figure 2, even if it obtains the same advantages when braking and accelerating the motorcycle. In particular, the connecting rod is not present any more, since its function is accomplished by cardan shaft transmission 34. With respect to the solution shown in figure 2, the cardan shaft transmission must then bear also the axial loads that would be born by the connecting rod and, then, has to be suitably dimensioned.

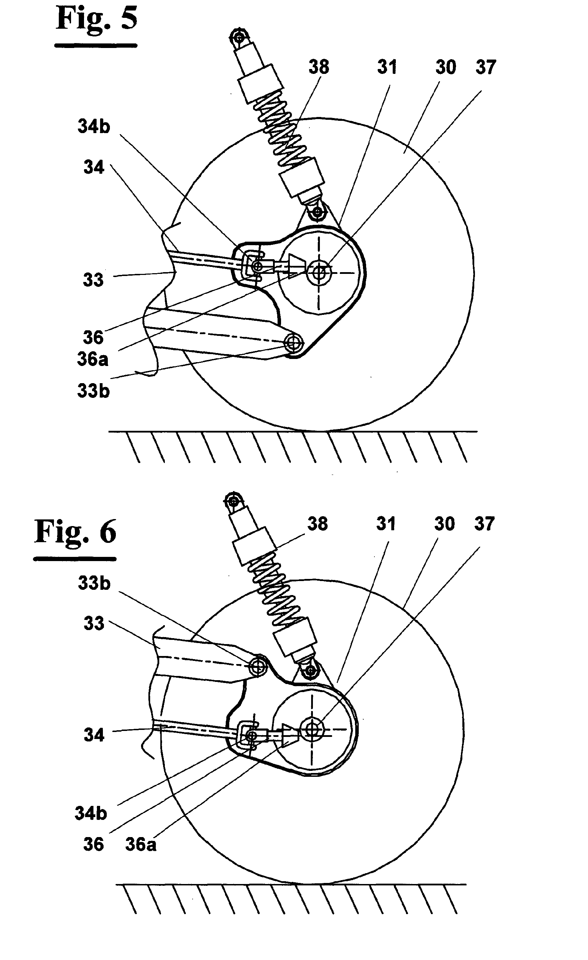

A variation of the solution of figure 3 is shown in figure 5 where a bevel gear pair is used so that shaft 36 is not incident with axis 37 of wheel 30. This way there is the advantage of increasing the distance between arm 33 of the suspension and transmission shaft 34, thus reducing the loads owing to the braking moment or to the moment due to acceleration of the motorcycle.

In figure 6 a further embodiment is shown, where transmission 34 and arm 36 are inverted with respect to a vertical direction. Like figures 3 and 5, an articulated quadrilateral is formed, with the same advantages and performances according to the present invention. This configuration is suitable to the cases of motorcycles in which the shaft 35 at the outlet by the gearbox is low, as well as a higher height from ground of arm 33 is necessary.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A rear suspension for a motorcycle with cardan shaft transmission (34), said suspension comprising a suspension arm (33), articulated between the frame (32) of the motorcycle and the hub (31) of the rear wheel (30), said transmission being formed by a longitudinal transmission shaft (34), connected at the ends by means of cardan joint ends (34a,34b) respectively to a shaft (35) at the exit of a gearbox and a pinion gear shaft of a bevel gear pair (36) for transmission of the movement to the rear wheel (30) of the motorcycle,
**characterised in that**
an articulated quadrilateral mechanism is formed, wherein an edge of the quadrilateral is said transmission shaft (34) and the opposite edge of the quadrilateral is said suspension arm (33).

2. Rear suspension according to claim 1, wherein said cardan shaft transmission (34) has a distance between the cardan joint ends (34a,34b) equal to the length of said suspension arm (33).

3. Rear suspension according to claim 1, wherein the distance between the articulated ends of the suspension arm (33) and the two cardan joint ends (34a,34b) are equal so that the quadrilateral becomes a four-bar linkage.

4. Rear suspension according to the previous claims, wherein the two shafts at the respective exits of the gearbox (35) and of the pinion gear (36) of the bevel gear pair are parallel to each other.

5. Rear suspension according to claim 4, wherein the cardan joint ends (34a,34b) provided at the end of said transmission shaft (34) are oriented so that said cardan shaft transmission (34) is homo-kinetic.

6. Rear suspension according to any one of the previous claims, wherein the axis of the pinion gear (36) of the bevel gear pair is not incident with the axis (37) of the wheel (30), whereby the distance between said shaft of the transmission (34) and said suspension arm (33) is increased.

7. Rear suspension according to any one of the previous claims wherein said shaft of the transmission (34) is located above said suspension arm (33).

8. Rear suspension according to any one of the previous claims wherein said shaft of the transmission (34) is located below said suspension arm (33).

9. Rear suspension according to any one of the previous claims , wherein the axles (34,35,36) connected to the two cardan joint ends (34a,34b) are not necessarily coplanar.
